# EUROPÄISCHE PATENTSCHRIFT

(11) **EP 2 094 369 B1**
(45) Veröffentlichungstag und Bekanntmachung des Hinweises auf die Patenterteilung: **01.02.2012**
(21) Anmeldenummer: 07847969.8
(22) Anmeldetag: 07.12.2007
(51) Int. Cl.: B01D 46/00

(54) **FILTERGEHÄUSE UND HERSTELLUNGSVERFAHREN**
FILTER HOUSING AND PRODUCTION METHOD
BOÎTIER DE FILTRE ET PROCÉDÉ DE FABRICATION

(30) Priorität: 08.12.2006 US 869193 P
(43) Veröffentlichungstag der Anmeldung: 02.09.2009
(73) Patentinhaber: MAHLE International GmbH, 70376 Stuttgart (DE)
(72) Erfinder: DALY, Paul Desmond, Troy, Michigan 48084 (US); LETOURNEAU, Mark, Dover Centre, Ontario N0P 1L0 (CA); MAMMARELLA, John Ronald, Windsor, Ontario N9E 4L7 (CA); MCWILLIAM, Richard Donald, Shedden, Ontario N0L 2E0 (CA); MCLEAN, Ian R., Chatham, Ontario N7L 3R7 (CA); VANDERVEEN, James Kenneth, Blenheim, Ontario N0P 1A0 (CA); WHITENTON BAYLIS, Bobbye Kaye, Harrow, Ontario N0R 1G0 (CA); POWELL, Jeffrey Joseph, Belle River, Ontario N0R 1A0 (CA); WHALEY, Lisa, Wheatley, Ontario N0P 2P0 (CA)
(74) Vertreter: BRP Renaud & Partner
(86) Internationale Anmeldenummer: PCT/EP2007/063508
(87) Internationale Veröffentlichungsnummer: WO 2008/068327

(56) Entgegenhaltungen:
- DE-A1- 4 326 731
- DE-A1- 19 700 565
- DE-C1- 4 241 586
- US-A1- 2002 069 625
- US-A1- 2004 134 171

## Beschreibung

Die vorliegende Erfindung betrifft ein Filtergehäuse zur Aufnahme wenigstens eines Luftfilterelements, insbesondere für eine Frischluftanlage einer Brennkraftmaschine, mit den Merkmalen des Oberbegriffs des Anspruchs 1. Die Erfindung betrifft außerdem ein Verfahren zum Herstellen eines derartigen Filtergehäuses.

Ein Filtergehäuse besteht üblicherweise aus zwei Schalenkörpern, die in der Regel aus Kunststoff hergestellt sind. Die beiden Schalenkörper weisen jeweils einen Flansch auf und sind im Bereich dieser Flansche mit Hilfe von Befestigungselementen aneinander befestigbar. Beispielsweise können hierzu Schrauben verwendet werden, um die Schalenkörper miteinander zu verschrauben. Ebenso ist es grundsätzlich möglich, an den Flanschen federnde Klammern, Laschen oder Bügel anzubringen, um die Schalenkörper aneinander festzulegen. Derartige Beschlagelemente sind dabei üblicherweise aus Metall hergestellt und werden nachträglich an den Schalenkörpern angebracht.

Aus der DE 197 00565 A1 ist ein Filtergehäuse zur Aufnahme wenigstens eines Luftfilterelements für eine Frischluftanlage einer Brennkraftmaschine bekannt, das zwei Schalenkörper aus Kunststoff aufweist, die jeweils einen Flansch aufweisen und im Bereich der Flansche mittels Befestigungselementen aneinander befestigbar sind. Die Befestigungselemente sind dabei zusammen mit dem jeweiligen Schalenkörper in einer gemeinsamen Form durch Spritzgießen hergestellt. Zumindest eines der Befestigungselemente ist als Lasche ausgestaltet, die an einem der Flansche angeordnet ist und die zum Befestigen der Schalenköper aneinander mit einer am anderen Flansch ausgebildeten Rastkontur zusammenwirkt. Der eine Schalenkörper ist zusammen mit der wenigstens einen Lasche in einer gemeinsamen Form durch Spritzgießen hergestellt, während der andere Schalenkörper zusammen mit der wenigstens einen Rastkontur in einer gemeinsamen Form durch Spritzgießen hergestellt ist.

Die vorliegende Erfindung beschäftigt sich mit dem Problem, für ein Filtergehäuse bzw. für ein zugehöriges Herstellungsverfahren eine verbesserte Ausführungsform anzugeben, die sich insbesondere dadurch auszeichnet, dass sich der Aufwand zur Herstellung des Filtergehäuses reduziert, so dass es insbesondere preiswerter herstellbar ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den jeweiligen Schalenkörper mit dem jeweiligen Befestigungselemente zusammen in einer gemeinsamen Form durch Spritzgießen herzustellen. Hierdurch befinden sich die jeweiligen Befestigungselemente nach dem Spritzgießen des Schalenkörpers bereits am Schalenkörper, so dass eine separate Montage der Befestigungselemente am Schalenkörper entfallen kann. Hierdurch kann auf einen Herstellungsschritt verzichtet werden, was die Herstellung der Filtergehäuse preiswerter macht.

Besonders vorteilhaft ist dabei, dass zumindest eines der Befestigungselemente als Lasche ausgestaltet ist, die an einem der Flansche angeordnet ist und die zum Befestigen der Schalenkörper aneinander mit einer am anderen Flansch ausgebildeten Rastkontur zusammenwirkt, die dann ein komplementäres Befestigungselement bildet. Der eine Schalenkörper ist dann zusammen mit der wenigstens einen Lasche in einer gemeinsamen Form durch Spritzgießen hergestellt, während der andere Schalenkörper zusammen mit der wenigstens einen Rastkontur in einer gemeinsamen Form durch Spritzgießen hergestellt ist. Derartige Laschen, die mit einer Rastkontur zusammenwirken, sind manuell relativ einfach bedienbar, wodurch das Filtergehäuse besonders einfach geöffnet und verschlossen werden kann.

Bei der Erfindung ist die wenigstens eine Lasche so am Schalenkörper ausgeformt, dass sie in einem integral am jeweiligen Schalenkörper ausgebildeten Beschlag schwenkverstellbar gelagert ist. Dabei ist die Lasche beim Herstellen des jeweiligen Schalenkörpers so spritzgeformt, dass sie zunächst mit dem Beschlag über wenigstens eine Sollbruchstelle fest verbunden ist, wobei diese Sollbruchstelle beim ersten Schwenkverstellen der Lasche bricht. Außerdem ist beim erfindungsgemäßen Filtergehäuse die Lasche im Beschlag durch Formschluss verliersicher angeordnet. Diese Maßnahmen ermöglichen eine einfache Handhabung der Befestigungselemente zum Öffnen und Schließen des Filtergehäuses.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Schnittansicht eines Filtergehäuses im Bereich einer Verbindungsstelle,
- Fig. 2: eine geschnittene perspektivische Ansicht auf einen Schalenkörper im Bereich der Verbindungsstelle, jedoch bei einer anderen Ausführungsform,
- Fig. 3: eine Schnittansicht der Ausführungsform gemäß Fig. 2,
- Fig. 4: eine perspektivische Ansicht eines Schalenkörpers im Bereich der Verbindungsstelle bei einer weiteren Ausführungsform,
- Fig. 5: eine Schnittansicht des Filtergehäuses in einem anderen Bereich der Verbindungsstelle.

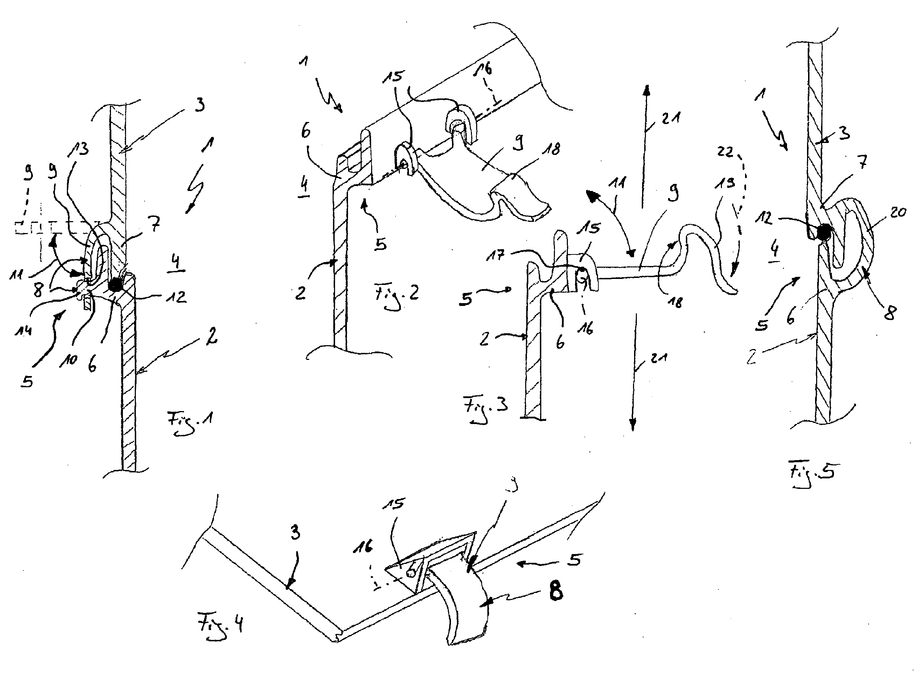

Entsprechend den Fig. 1 bis 5 umfasst ein Filtergehäuse 1 zwei Schalenkörper 2 und 3. Im zusammengebauten Zustand umschließen die beiden Schalenkörper 2, 3 einen Innenraum 4 zur Aufnahme zumindest eines nicht gezeigten Luftfilterelements. Das Filtergehäuse 1 kann beispielsweise bei einer Frischluftanlage einer Brennkraftmaschine, die insbesondere in einem Kraftfahrzeug angeordnet sein kann, zur Anwendung kommen. Vom Filtergehäuse 1 ist hier nur ein kleiner Bereich dargestellt, in dem die beiden Schalenkörper 2, 3 im zusammengebauten Zustand also bei verschlossenem Gehäuse 1 miteinander verbunden sind. Hierbei wird eine im folgenden mit 5 bezeichnete Verbindungsstelle definiert. Im Bereich dieser Verbindungsstelle 5 besitzen die Schalenkörper 2, 3 jeweils einen Flansch 6 bzw. 7. Die Flansche 6, 7 definieren die Verbindungsstelle 5. Im Bereich dieser Flansche 6, 7 sind die beiden Schalenkörper 2, 3 mit Hilfe von Befestigungselementen 8 aneinander befestigbar. Im gezeigten Beispiel greifen die Flansche 6, 7 nach Art einer Nut-Feder-Verbindung ineinander. In Fig. 1 ist in der Nut-Feder-Verbindung der Flansche 6, 7 zusätzlich ein Dichtungselement 12 angeordnet, um die luftdichte Verbindung der beiden Schalenkörper 2, 3 zu verbessern.

Die Schalenkörper 2, 3 bestehen aus Kunststoff, wodurch das Filtergehäuse 1 vergleichsweise preiswert realisierbar ist. Erfindungsgemäß sind auch die Befestigungselemente 8 aus Kunststoff hergestellt. Dabei sind die Befestigungselemente 8 zusammen mit dem jeweiligen Schalenkörper 2, 3 in einer gemeinsamen Spritzform durch Spritzgießen hergestellt.

Besonders vorteilhaft sind dabei die hier gezeigten Ausführungsformen, bei denen zumindest eines der Befestigungselemente 8 als Lasche oder Hebel oder Bügel ausgestaltet und mit 9 bezeichnet ist. Besagte Lasche 9 ist dabei an einem der Flansche, hier am Flansch 7 des oberen Schalenkörpers 3 ausgestaltet bzw. angeordnet. Zum Befestigen der beiden Schalenkörper 2, 3 aneinander wirkt die Lasche 9 mit einem komplementären, als Rastkontur 10 ausgestalteten Befestigungselement 8 zusammen, das am anderen Flansch 6 des anderen Schalenkörpers 2 ausgebildet ist. Dabei erfolgt die Herstellung der beiden Schalenkörper 2, 3 zweckmäßig so, dass der eine Schalenkörper 3 zusammen mit der wenigstens einen Lasche 9 in einer gemeinsamen Form durch Spritzgießen hergestellt wird. Außerdem wird der andere Schalenkörper 2 zusammen mit wenigstens einer Rastkontur 10 in einer gemeinsamen Form durch Spritzgießen hergestellt.

Fig. 1 zeigt eine Ausführungsform, bei welcher die wenigstens eine Lasche 9 integral am jeweiligen Schalenkörper 3 ausgebildet ist. Gleichzeitig ist diese Lasche 9 so ausgestaltet, dass sie federelastisch biegbar ist. Insbesondere kann sie soweit federelastisch biegbar sein, dass sie an der jeweiligen Rastkontur 10 einrastbar ist. Fig. 1 zeigt die Lasche 9 mit durchgezogener Linie im eingerasteten Zustand und mit unterbrochener Linie in einem entspannten Ausgangszustand. Ein Doppelpfeil 11 deutet die biegeelastische Verformbarkeit der Lasche 9 an. Im Beispiel wird die Lasche 9 zum Überführen in den eingerasteten Zustand um ca. 90° umgebogen. Es ist klar, dass auch andere Ausführungsformen mit einem anderen, insbesondere mit einem kleineren Biegewinkel denkbar sind. Beispielsweise kann auch der dargestellte Zustand der unverformte Zustand sein, so dass die Lasche 9 zum Einrasten und zum Entrasten vorübergehend aufgebogen werden muss.

Bei der in Fig. 1 gezeigten Ausführungsform besitzt die jeweilige Lasche 9 eine Rastöffnung 13, in die eine Rastnase 14 der Rastkontur 10 einrasten kann. Hierdurch kann eine besonders effektive Verrastung realisiert werden, über welche die beiden Schalenkörper 2, 3 formschlüssig aneinander fixierbar sind.

Die Fig. 2 und 3 zeigen eine andere Ausführungsform, bei welcher die jeweilige Lasche 9 in einem Beschlag 15 um eine Schwenkachse 16 schwenkverstellbar gelagert ist. Der jeweilige Beschlag 15 ist dabei integral am jeweiligen Schalenkörper 2 ausgebildet. Entsprechendes gilt auch für die in Fig. 4 gezeigte Ausführungsform. Auch dort ist die Lasche 9 in einem am Schalenkörper 3 integral ausgebildeten Beschlag 15 um eine Schwenkachse 16 schwenkverstellbar gelagert.

Bei der in den Fig. 2 und 3 gezeigten Ausführungsform wird die Lasche 9 beim Herstellen des jeweiligen Schalenkörpers 2 so spritzgeformt, dass sie anschließend mit dem Beschlag 15 über eine in Fig. 3 durch einen Punkt symbolisch angedeutete Sollbruchstelle 17 fest verbunden ist. Diese Sollbruchstelle 17 kann beim ersten Schwenkverstellen der Lasche 9 gebrochen werden, wodurch die Lasche 9 vom Schalenkörper 2 separiert und die freie Schwenkverstellbarkeit der Lasche 9 realisiert wird. Die Ausbildung einer derartigen Sollbruchstelle 17 kann die Herstellung der gemeinsamen Form von Schalenkörper 2 und Lasche 9 vereinfachen. In Fig. 3 ist eine mögliche Krafteinleitung zum Losbrechen der Lasche 9 durch Pfeile 21 angedeutet. Die Schwenkverstellbarkeit ist wieder durch einen Doppelpfeil 11 angedeutet. Ein weiterer, mit unterbrochener Linie dargestellter Pfeil 22 symbolisiert die federelastische Betätigung des Federabschnitts 18 an dessen Verlängerung oder Fortsatz 19.

Bei der in Fig. 4 gezeigten Ausführungsform wird die Lasche 9 am jeweiligen Schalenkörper 3 so spritzgeformt, dass sie von Anfang an ein separates Bauteil bildet, das bereits im Beschlag 15 schwenkverstellbar gelagert ist. Besonders vorteilhaft ist bei beiden Varianten eine Ausführungsform, bei welcher die Lasche 9 so geformt und spritzgeformt ist, dass sie im Beschlag durch 15 durch Formschluss verliersicher angeordnet ist.

Bei der Ausführungsform der Fig. 2 und 3 ist an der Lasche 9 ein Federabschnitt 18 ausgebildet, der am anderen Flansch die komplementär dazu ausgestaltete Rastkontur 10 formschlüssig hintergreifen kann. Eine Verlängerung 19 dieses Federabschnitts 18 vereinfacht das Öffnen und Schließen bzw. das Ein- und Ausrasten der Lasche 9, was die Handhabung der Befestigungselemente 8 vereinfacht.

Entsprechend Fig. 5 kann zumindest eines der Befestigungselemente 8 als Scharnier 20 ausgestaltet sein. Dieses Scharnier 20 ist dabei an beiden Schalenkörpern 2, 3 integral ausgebildet und ermöglicht ein Verschwenken der beiden Schalenkörper 2, 3 relativ zueinander, um so das Filtergehäuse 1 öffnen und schließen zu können. Das Scharnier 20 ist durch einen entsprechend biegeelastischen stegförmigen Abschnitt gebildet, der beispielsweise eine reduzierte Wandstärke aufweist. Insbesondere kann es sich beim Scharnier 20 um ein Filmscharnier handeln. Bei einem im Querschnitt rechteckigem Filtergehäuse 1 ist ein derartiges Scharnier 20 bzw. sind derartige Scharniere 20 nur an einer Seite des Filtergehäuses 1 angeordnet bzw. ausgebildet, um die beiden Schalenkörper 2, 3 um eine entlang dieser Gehäuseseite verlaufende Schwenkachse schwenken zu können. Zumindest eine der drei anderen Gehäuseseiten kann dann zumindest eines der Paare miteinander zusammenwirkender Befestigungselemente 8 aufweisen, wie z.B. eine Lasche 9 und eine Rastkontur 10.

Sofern ein derartiges Scharnier 20 vorgesehen ist, lassen sich beide Schalenkörper 2, 3 mit sämtlichen Befestigungselementen 8 in einer gemeinsamen Form spritzformen, wodurch die Herstellungskosten nochmals reduziert werden können.

## Patentansprüche

1. Filtergehäuse zur Aufnahme wenigstens eines Luftfilterelements, insbesondere für eine Frischluftanlage einer Brennkraftmaschine,
- mit zwei Schalenkörpern (2, 3) aus Kunststoff, die jeweils einen Flansch (6, 7) aufweisen und im Bereich der Flansche (6, 7) mittels Befestigungselementen (8) aneinander befestigbar sind,
- wobei die Befestigungselemente (8) zusammen mit dem jeweiligen Schalenkörper (2, 3) in einer gemeinsamen Form durch Spritzgießen hergestellt sind,
- wobei zumindest eines der Befestigungselemente (8) als Lasche (9) ausgestaltet ist, die an einem der Flansche (6, 7) angeordnet ist und die zum Befestigen der Schalenköper (2, 3) aneinander mit einer am anderen Flansch (6, 7) ausgebildeten Rastkontur (10) zusammenwirkt,
- wobei der eine Schalenkörper (2, 3) zusammen mit der wenigstens einen Lasche (9) in einer gemeinsamen Form durch Spritzgießen hergestellt ist,
- wobei der andere Schalenkörper (2, 3) zusammen mit der wenigstens einen Rastkontur (10) in einer gemeinsamen Form durch Spritzgießen hergestellt ist,
**dadurch gekennzeichnet,**
- **dass** die wenigstens eine Lasche (9) in einem integral am jeweiligen Schalenkörper (2, 3) ausgebildeten Beschlag (15) schwenkverstellbar gelagert ist,
- **dass** die Lasche (9) im Beschlag (15) durch Formschluss verliersicher angeordnet ist,
- **dass** die Lasche (9) beim Herstellen des jeweiligen Schalenkörpers (2, 3) so spritzgeformt ist, dass sie mit dem Beschlag (15) über wenigstens eine Sollbruchstelle (17) fest verbunden ist, wobei die wenigstens eine Sollbruchstelle (17) beim ersten Schwenkverstellen der Lasche (9) bricht.

2. Filtergehäuse nach Anspruch 1,
**dadurch gekennzeichnet,**
**dass** zumindest eines der Befestigungselemente (8) als Scharnier (20) ausgestaltet ist, das an beiden Schalenkörpern (2, 3) integral ausgebildet ist und ein Verschwenken der Schalenkörper (2, 3) relativ zueinander zum Öffnen und Schließen des Filtergehäuses (1) ermöglicht.

3. Filtergehäuse nach Anspruch 2,
**dadurch gekennzeichnet,**
**dass** beide Schalenkörper (2, 3) zusammen mit den Befestigungselementen (8) in einer gemeinsamen Form spritzgeformt sind.

4. Verfahren zum Herstellen eines Filtergehäuses (1) nach einem der Ansprüche 1 bis 3,
- wobei das Filtergehäuse (1) zwei Schalenkörper (2, 3) aufweist, die jeweils einen Flansch (6, 7) aufweisen und im Bereich der Flansche (6, 7) mittels Befestigungselementen (8) aneinander befestigbar sind,
- wobei die Befestigungselemente (8) zusammen mit dem jeweiligen Schalenkörper (2, 3) in einer gemeinsamen Form durch Spritzgießen hergestellt werden.

## Claims

1. A filter housing for the accommodation of at least one air filter element, in particular for a fresh air apparatus of an internal combustion engine,
- with two shell bodies (2, 3) made of plastic which each have a flange (6, 7) and which can be fastened to each other in the area of the flanges (6, 7) by means of fastening elements (8),
- wherein the fastening elements (8) are produced together with the respective shell body (2, 3) in a common mold by means of injection molding,
- wherein at least one of the fastening elements (8) is formed as a clip (9) which is arranged on one of the flanges (6, 7) and which interacts for fastening the shell bodies (2, 3) to each other with a latching contour (10) which is formed on the other flange (6, 7),
- wherein the one shell body (2, 3) is produced together with the at least one clip (9) in a common mold by means of injection molding,
- wherein the other shell body (2, 3) is produced together with the at least one latching contour (10) in a common mold by means of injection molding,
**characterized in**
- **that** the at least one clip (9) is supported pivotably displaceable in a fitting (15) which is integrally formed on the respective shell body (2, 3),
- **that** the clip (9) is arranged captively in the fitting (15) by means of positive locking,
- **that** the clip (9) during producing the respective shell body (2, 3) is injection molded in such a manner that it is fixed connected with the fitting (15) by means of at least one predetermined breaking point (17), wherein the at least one predetermined breaking point (17) breaks upon the first pivoting displacement of the clip (9).

2. The filter housing according to claim 1,
**characterized in**
**that** at least one of the fastening elements (8) is designed as a hinge (20) which is integrally formed on both shell bodies (2, 3) and allows pivoting of the shell bodies (2, 3) relative to each other for opening and closing the filter housing (1).

3. The filter housing according to claim 2,
**characterized in that** both shell bodies (2, 3) are injection molded together with the fastening elements (8) in a common mold.

4. A method for producing a filter housing (1) according to any one of the claims 1 to 3,
- wherein the filter housing (1) has two shell bodies (2, 3) which each have a flange (6, 7) and which can be fastened to each other in the area of the flanges (6, 7) by means of fastening elements (8).
- wherein the fastening elements (8) are produced together with the respective shell body (2, 3) in a common mold by means of injection molding.

## Revendications

1. Boîtier de filtre pour recevoir au moins un élément de filtre à air, notamment pour une installation d'air frais d'un moteur à combustion interne,
- comportant deux corps de coque (2, 3) en plastique, qui présentent respectivement un bride (6, 7) et peuvent être fixés l'un sur l'autre au niveau de la bride (6, 7) au moyen d'éléments de fixation (8),
- dans lequel les éléments de fixation (8) sont fabriqués conjointement au corps de coque (2, 3) respectif dans un moule commun par moulage par injection,
- dans lequel au moins un des éléments de fixation (8) est configuré comme une languette (9), qui est disposée sur une des brides (6, 7) et qui coopère à des fins de fixation des corps de coque (2, 3) l'une sur l'autre avec un contour d'encliquetage (10) réalisé sur l'autre bride (6, 7),
- dans lequel un des corps de coque (2, 3) est fabriqué conjointement à au moins une languette (9) dans un moule commun par moulage par injection,
- dans lequel l'autre corps de coque (2, 3) est fabriqué conjointement à au moins un contour d'encliquetage (10) dans un moule commun par moulage par injection,
**caractérisé en ce que**
- la au moins une languette (9) est positionnée de manière basculante dans une garniture (15) réalisée en un seul tenant sur le corps de coque respectif (2, 3),
- la languette (9) est disposée de manière imperdable par conjonction de forme dans la garniture (15),
- la languette (9) est moulée par injection lors de la fabrication du corps de coque respectif (2, 3), de telle sorte qu'elle soit solidement reliée à la garniture (15) par l'intermédiaire d'au moins un point de rupture de consigne (17), dans lequel le au moins un point de rupture de consigne (17) se rompt lors du premier basculement de la languette (9).

2. Boîtier de filtre selon la revendication 1,
**caractérisé en ce que**
au moins un des éléments de fixation (8) est réalisé comme une charnière (20), qui est réalisée en un seul tenant sur les deux corps de coque (2 ,3) et permet un basculement des corps de coque (2, 3) l'un par rapport à l'autre pour ouvrir et fermer le boîtier de filtre (1) .

3. Boîtier de filtre selon la revendication 2,
**caractérisé en ce que**
les deux corps de coque (2, 3) sont moulés par injection conjointement aux éléments de fixation (8) dans un moule commun.

4. Procédé de fabrication d'un boîtier de filtre (1) selon une des revendications 1 à 3,
- dans lequel le boîtier de filtre (1) présente deux corps de coque (2, 3), qui présentent respectivement une bride (6, 7) et peuvent être fixés l'un sur l'autre au niveau de la bride (6, 7) au moyen d'éléments de fixation (8),
- dans lequel les éléments de fixation (8) sont fabriqués conjointement au corps de coque (2, 3) respectif dans un moule commun par moulage par injection.
